# EUROPEAN PATENT APPLICATION

(11) **EP 0 719 957 A1**
(43) Date of publication of application: **03.07.1996**
(21) Application number: 95120658.0
(22) Date of filing: 28.12.1995
(51) Int. Cl.: F16D 65/12, F16D 69/02, F16D 69/00

(54) **Carbon material for brake linings or brake discs**

(30) Priority: 28.12.1994 JP 337670/94; 06.02.1995 JP 39382/95
(71) Applicant: NIPPON OIL CO. LTD., Minato-ku Tokyo (JP)
(72) Inventor: Kohno, Takefumi, c/o Nippon Oil Co., Ltd., Yokohama-shi, Kanagawa (JP); Hiro, Masakazu, c/o Nippon Oil Co., Ltd., Yokohama-shi, Kanagawa (JP); Soda, Yoshio, c/o Nippon Oil Co., Ltd., Yokohama-shi, Kanagawa (JP); Ishi, Mitsuhiro, c/o Nippon Oil Co., Ltd., Yokohama-shi, Kanagawa (JP)
(74) Representative: Modiano, Guido, Dr.-Ing.

(57) **Abstract**

A disk pad type brake comprising a rotor disk (1) provided with a carbon-carbon composite material (A) as a friction member, and at least one pad (2) provided with a carbon-carbon composite material (B) as a friction member, wherein the composite (A) and the composite (B) have different characteristics; and
a multi-disk type brake comprising at least one rotor disk (1) provided with a carbon-carbon composite material (A) as a friction member, and at least one stator disk (3) provided with a carbon-carbon composite material (B) as a friction member, wherein the composite (A) and the composite (B) have different characteristics.

## Description

### Background of the Invention

### 1. Field of the Invention

The present invention relates to a disk brake.

### 2. Prior Art

Disk brakes are widely used in various fields, e.g., in motorcycles, automobiles, railway vehicles and airplanes, as one type of friction brakes. The disk brakes are classified into a disk pad type brake, a multi-disk brake and the like in accordance with the differences in their styles. An organic material, a metal-based material, a carbon-carbon composite material or the like is used in a conventional disk brake.

An organic brake material is used mainly as a pad material or pad surface material (lining material) of a disk pad type brake.

According to the typical manufacturing method of the organic brake material, a thermosetting resin, e.g., a phenol resin, is reinforced by organic fibers, metal fibers, inorganic fibers or the like to prepare a composite material which was incorporated with various kinds of additives to adjust the friction performance of a brake to be obtained, molded into a desired shape and then subjected to heat treatment and the like in accordance with the purpose for which the resulting brake is used. The organic matter as the major ingredient of the organic brake material is decomposed at a temperature of about 300°C or more. Thus, when a brake made from the organic material is used for braking an object moving at a high speed or is used under a high pressing force, it will be decomposed and deteriorated by the frictional heat, thereby to remarkably shorten its service life and obtain no sufficient braking force due to its fading phenomenon and the like.

Metal-based brake material includes a cast iron-, forged steel-, or alloy-based brake material. The metal-based brake material is utilized as a disk material for a disk pad type brake. In recent years, application of an aluminum alloy-based brake material to a disk is discussed for the purpose of weight reduction. The alloy-based brake material is also used as a pad material, and in particular, a copper-based sintered alloy is widely utilized as a pad material. The metal-based brake material is widely used as a disk material for a multi-disk type brake as well, and is utilized mainly as a brake material for an airplane.

When the metal-based brake material is used for braking a body moving at a high speed or is used under a high pressing force whereby it is increased frictional heat, it will exhibit a fading phenomenon at a temperature near the melting point of its principal metal ingredient. This raises a problem that a sufficient frictional force cannot be obtained. Further, when the metal-based brake material is used at a temperature equal to or higher than its melting point, the disk and the lining, after the disk is out of operation, are fusion adhered to each other and cannot be disconnected. To resume the operation, cumbersome repair or replacement of the parts cannot but be performed. Since the metal-based brake material has a large specific gravity, it will make the overall weight of a vehicle loaded therewith heavier thereby to interfere with a decrease in fuel cost and noise. Since the metal-based brake material has a large thermal expansion coefficient, it will be deteriorated with cracks and the like being accompanied by due to the impact of the frictional heat.

A carbon-carbon composite material is a carbon material reinforced with carbon fibers. As this material has a smaller specific gravity than the metal-based brake material, it is advantageous in less increasing the weight of a vehicle when the vehicle is loaded with the brake material. As this material does not have a melting point, it can avoid troubles, e.g., fusing. As this material has a decomposition temperature of as high as about 3,000°C while the organic brake material has a lower one, its deterioration due to the frictional heat can be remarkably lessened. Furthermore, as the C/C composite material has a small thermal expansion coefficient, its durability against a thermal shock is superior to that of the organic material.

The carbon-carbon composite material-based brake material has been utilized in a field which is difficult for an organic or metal-based brake material to cope with and which particularly requires heat resistance and weight-lightening. This C/C-based material is utilized in the disk pad type brake of a racing motorcycle or automobile and also in an airplane multi-disk type brake of a large passenger airplane, a combat aircraft and the like that are used under strict environmental conditions.

Of the above brakes, a carbon-carbon composite material-based disk pad type brake is usually such that the carbon-carbon composite material used in its rotor disk and the carbon-carbon composite material used in its pad have the same properties or characteristics.

Similarly, the carbon-carbon composite material-based multi-disk type brake is usually such that the carbon-carbon composite material used in its rotor disk and the carbon-carbon composite material used in its stator disk have the same properties or characteristics.

Even in a case where the carbon-carbon composite material has been changed in characteristics in accordance with its use, an environment in which it is used, and a method for the control of it, the carbon-carbon composite material used in the rotor disk and the carbon-carbon composite material used in the pad or stator disk has been changed to have the same new characteristics.

When the carbon-carbon composite material has been improved to enhance its durability and frictional characteristics, the carbon-carbon composite material used in the rotor disk and the carbon-carbon composite material used in the pad or stator disk have usually been changed to have the same new characteristics.

The carbon-carbon composite material used in the conventional disk pad type brake and multi-disk type brake will wear as it is used and require periodical replacement of it. In this case, although the worn-out carbon-carbon composite material is usually replaced with a new one, it is sometimes replaced with a reclaimed and regenerated one.

According to a method of reclaiming and regenerating the worn-out carbon-carbon composite material, a surfacing material made of a carbon-carbon composite material is bonded to the worn-out carbon-carbon composite material as the core material (U.S.P. No. 4,742,948 and Japanese Patent Gazette No. 4-63026).

According to another report (Second CPC Study Meeting, 1992), when a carbon-carbon composite material arranged on a frictionally sliding surface of a brake has desired frictional characteristics but its mechanical strength is insufficient for the conditions of use desired, in order to reinforce this material, a high-strength material different from the material of the frictionally sliding surface is adhered to the material of the surface, as an inner or reverse non-frictionally sliding part.

In these prior art techniques, however, among the carbon-carbon composite materials usually used in the rotor disk and the carbon-carbon composite materials usually used in the pad or stator disk, those having the same characteristics have been used as the friction members arranged on the frictionally sliding surfaces of the rotor disk, the pad, and the stator disk.

### SUMMARY OF THE INVENTION

It is an object of the present invention to provide a highly durable brake having frictional characteristics matching its use, an environment in which it is used, and a method for controlling it.

In order to achieve the above object, there is provided a disk pad type brake comprising a rotor disk provided with a carbon-carbon composite material (A) as a friction member, and at least one pad provided with a carbon-carbon composite material (B) as a friction member, wherein the carbon-carbon composite material (A) and the carbon-carbon composite material (B) are different in characteristics from each other.

According to the present invention, there is also provided a multi-disk type brake comprising at least one rotor disk whose friction member is made of a carbon-carbon composite material (A), and at least one stator disk whose friction member is made of a carbon-carbon composite material (B), wherein the carbon-carbon composite material (A) and the carbon-carbon composite material (B) have different characteristics.

A disk pad type brake and a multi-disk type brake according to the present invention will be described below in detail.

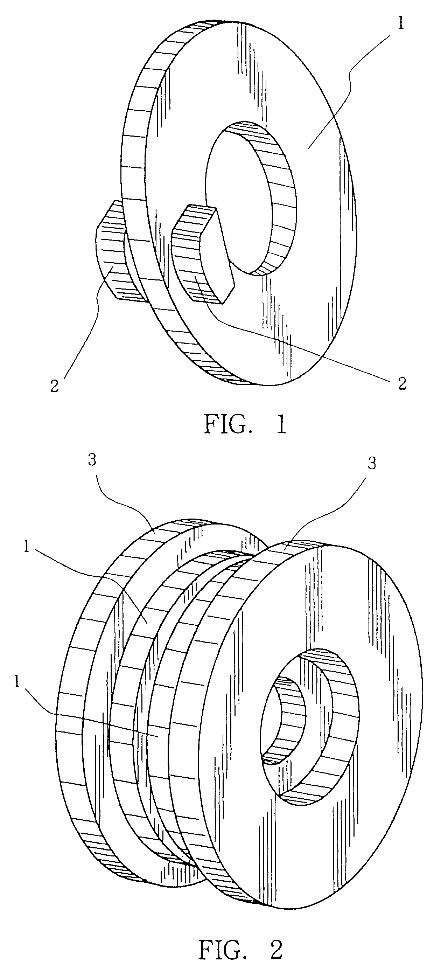

The rotor disk and pad of the disk pad type brake according to the present invention as shown in Fig. 1 have friction members respectively on their surfaces.

The friction member on the surface of the pad is sometimes called a lining.

In the present invention, a carbon-carbon composite material is used to form the friction member.

In the present invention, the rotor disk or the pad may be entirely made of by the carbon-carbon composite material.

The rotor disk and stator disk of the multi-disk type brake according to the present invention as shown in Fig. 2 also have friction members made of the carbon-carbon composite material on their surfaces, in the same manner as in the disk pad type brake. The rotor disk or the stator disk may be entirely made of the carbon-carbon composite material.

In the present invention, the disk of a disk pad type brake is called a rotor disk just like the rotor disk of the multi-disk type brake, as its function is similar to that of the multi-disk type brake.

Materials making up the portions other than the friction members in the disk pad type brake and the multi-disk type brake of the present invention are not particularly limited, and may be conventionally known ones.

For example, various types of metal-based materials, e.g., carbon steel, cast iron and aluminum can be used for a back plate for fixing a friction member, a cylinder for pressing the disks against each other, and an axis for rotating a rotor disk.

The disk pad type brake and the multi-disk type brake of the present invention can be provided with countermeasures for preventing the carbon-carbon composite material heated to a high temperature by frictional heat, from being worn out by oxidation. For example, the portions around the brake disk, the pad or the like can be accomodated in an inert atmosphere. A protection cover can be mounted on part of the carbon-carbon composite material. Part of the carbon-carbon composite material can be covered with an oxidation-resistant film. Alternatively, part of the carbon-carbon composite material can be reformed to an oxidation-resistant material.

The disk pad type brake of the present invention brings about a braking force by pressing the pad against the rotor disk.

Upon being pressed, the frictionally sliding portions of the friction members which are being rubbed with each other generate a frictional force. This frictional force is utilized as the braking force.

A surface having a frictionally sliding portion is wholly called a frictionally sliding surface. This frictionally sliding surface sometimes includes a non-frictionally sliding portion.

In general, the rotor disc is rotatable in sliding contact with the surface of the pad, and thus, the sliding contact sites of the disc are continuously shifted one after another as the disc rotates during braking while the frictionally sliding surface of the pad is always in contact with the frictionally sliding surface of the disc during braking.

As the non-contact portion (which does not contact with the pad even during braking) of the surface of the friction member of the rotor disk is exposed to the open air, it tends to be oxidized due to the frictional heat.

In contrast to this, as the frictionally sliding surface of the pad is kept in sliding contact with the rotor disk during braking, it is therefore not exposed to the open air during braking. However, the frictionally sliding time per unit sliding surface area of the pad is elongated, and the amount of heat received from the frictional heat is also increased.

Since the pad needs a driving device for pressing/disconnecting it to be arranged in the rear part of the pad, heat insulation for the rear part of the pad must be considered.

In this manner, in the disk pad type brake, since the rotor disk and the pad have different roles and service conditions, it is important to use their respective friction members to which respective specific characteristics have been imparted.

The multi-disk type brake of the present invention generates a braking force when its one or more rotating rotor disks and one or more non-rotating stator disks are pressed against each other.

In the multi-disk type brake of the present invention, the numbers and arrangements of rotor disks and stator disks can be selected in various manners in accordance with the purpose of use of the brake and/or required frictional characteristics. One or two surfaces of each disk can be used as the frictionally sliding surfaces in accordance with the arrangement of the disk, and a disk having no such sliding surface at all can also be used.

When a rotor disk and a stator disk are adjacent to each other, the opposite surfaces between them serve as frictionally sliding surfaces.

When two rotor disks are adjacent to each other, or when two stator disks are adjacent to each other, the opposing surfaces between them serve as a non-sliding surface. A surface having no adjacent disk also serves as a non-frictionally sliding surface.

The frictionally sliding surface is heated to a high temperature by frictional heat, whereas the non-sliding surface does not generate frictional heat.

When the non-sliding surface receives heat conducted from the interior of the disk, it dissipates heat to an adjacent disk, constituent parts other than the disk, the atmosphere or the like to cool the disk.

When the disk is heated to a high temperature by the frictional heat, the non-sliding surface and the non-sliding portions of the sliding surface are exposed to the open air and liable to be oxidized. In contrast to this, the sliding portion of the sliding surface which is kept in sliding contact during braking is not exposed to the open air and thus is not easily oxidized.

The stator disk is kept stationary, whereas the rotor disk rotates anytime or during braking.

Hence, the rotor disk must have a sufficiently large strength against a tensile stress caused by a centrifugal force generated by rotation.

In a disk having a rear surface where a pressing/disconnection driving device or the like is arranged, the component parts of the driving device or the like have low heat resistance since they are made of a material other than the carbon-carbon composite material. Thus, heat insulation for the rear surface of this disk must be considered.

In this manner, in the multi-disk type brake, the rotor disk and the stator disk have different roles and service conditions, and it is therefore important to impart different characteristics to their friction members.

Hence, in a disk pad type brake comprising a rotor disk having friction members made of a carbon-carbon composite material (A), and a pad having a friction member made of a carbon-carbon composite material (B), the carbon-carbon composite materials (A) and (B) used are made to have different characteristics, thereby obtaining a highly durable novel disk pad type brake having frictional characteristics matching its use, an environment in which it is used, and a method for the control of it.

Furthermore, in a multi-disk type brake constituted by a rotor disk having a friction member made of the carbon-carbon composite material (A), and a stator disk having a friction member made of the carbon-carbon composite material (B), said materials (A) and (B) are made to have different characteristics, thereby obtaining a highly durable novel multi-disk type brake having frictional characteristics matching its use, an environment in which it is used, and a method for controlling it.

Each of the carbon-carbon composite materials (A) and (B) having different characteristics is worked as required and mounted with a jig or the like, thereby forming the whole or part of each of various types of friction members, e.g., the rotor disk, the stator disk and the pad.

When a plurality of pads or stator disks are used, the carbon-carbon composite material used in one or more of the plurality of pads or stator disks can be made to have characteristics different from those of the carbon-carbon composite material used in the corresponding rotor disks.

Two or more types of carbon-carbon composite materials having different characteristics may be worked as required and mounted with jigs or the like by using an adhesive, and may be arranged or structurally disposed at one and other portions of the various types of friction members.

As described above, the carbon-carbon composite materials having different characteristics are arranged or disposed at desired portions as the friction members in accordance with the use of the resulting brake, an environment in which it is used, and a method for controlling it, thereby to obtain a highly durable disk pad type brake and multi-disk type brake each having desired frictional characteristics.

The different characteristics between the carbon-carbon composite materials (A) and (B) refer to at least one of thermal properties, mechanical properties, oxidation characteristics, and other material properties of the carbon-carbon composite materials.

The thermal properties include thermal conductivity and a coefficient of thermal expansion. The mechanical properties include hardness, tensile strength, a compression modulus of elasticity, and interlaminar shear strength. The oxidation characteristics include a rate of oxidation and an oxidation start temperature. Other material properties include density.

This will be described below in detail. If carbon-carbon composite materials used match one or more of the following items, they can provide a disk pad type brake and a multi-disk type brake exhibiting novel characteristics matching their respective uses, service conditions and methods for control.

The preferable carbon-carbon composite materials used in the various types of friction members described above, are those having a thermal conductivity falling within a range of 0.1 to 1,000 W/m·K.

In the present invention, in a case where carbon-carbon composite materials are so made as to have different thermal conductivities, respectively, they can be made into friction members having different characteristics.

In this case, the difference in thermal conductivities between the carbon-carbon composite materials having different thermal conductivities is preferably 0.1 to 700 W/m·K, more preferably 1 to 300 W/m·K and most preferably 5 to 100 W/m·K in the thickness direction of the friction member.

Similarly, the difference in thermal conductivities of said carbon-carbon composite materials is preferably 1 to 450 W/m·K, more preferably 2 to 250 W/m·K and most preferably 10 to 150 W/m·K in the radial direction (or in the direction parallel to the frictionally sliding surface) of the friction member.

The thermal conductivity, which is a higher one, of the carbon-carbon composite material is preferably 5 to 700 W/m·K and more preferably 10 to 300 W/m·K in the thickness direction of the friction member; and preferably 10 to 450 W/m·K and more preferably 20 to 350 W/m·K in the radial direction of the friction member.

The thermal conductivity, which is a lower one, of the carbon-carbon composite material is preferably 0.1 to 600 W/m·K and more preferably 0.1 to 200 W/m·K in the thickness direction of the friction member; and preferably 1 to 350 W/m·K and more preferably 1 to 150 W/m·K in the radial direction of the friction member.

The carbon-carbon composite material of the pad preferably has a lower thermal conductivity than the carbon-carbon composite material of the rotor disk in the thickness direction of the friction member, and the carbon-carbon composite material of the pad preferably has a higher thermal conductivity than the carbon-carbon composite material of the rotor disk in the radial direction of the friction member.

Further, the carbon-carbon composite material of the stator disk preferably has a higher thermal conductivity than the carbon-carbon composite material of the rotor disk in the thickness direction of the friction member, and the carbon-carbon composite material of the stator disk preferably has a lower thermal conductivity than the carbon-carbon composite material of the rotor disk in the radial direction of the friction member.

The carbon-carbon composite material used in the friction member preferably has a Shore hardness of 1 to 140 in the frictionally sliding surface, and more preferably a Shore hardness in a range of 30 to 140.

In the present invention, the respective carbon-carbon composite materials have different Shore hardnesses, so that they can form friction members having different characteristics.

In this case, the difference in Shore hardnesses between the carbon-carbon composite materials (A) and (B) is preferably 1 to 60, and more preferably 5 to 30.

The Shore hardness, which is a higher one, of the carbon-carbon composite material is preferably 60 to 140, and more preferably 70 to 140. The Shore hardness, which is a lower one, of the carbon-carbon composite material is preferably 30 to 100, and more preferably 30 to 90.

Further, it is preferable that the carbon-carbon composite material of the pad have a lower Shore hardness than the carbon-carbon composite material of the rotor disk.

Still further, it is preferable that the carbon-carbon composite material of the stator disk have a higher Shore hardness than the carbon-carbon composite material of the rotor disk.

The carbon-carbon composite materials used in the various types of the above friction members preferably have a tensile strength of 20 to 1,000 MPa in the radial direction of the friction member.

In the present invention, the respective carbon-carbon composite materials have different tensile strengths, so that they can form friction members having different characteristics.

In this case, the difference in tensile strength between the different types of carbon-carbon composite materials is preferably 1 to 200 MPa, more preferably 5 to 100 MPa and most preferably 10 to 50 MPa.

The tensile strength, which is a higher one, of one carbon-carbon composite material is preferably 50 to 1,000 MPa, and more preferably 60 to 400 MPa. The tensile strength, which is a lower one, of the other carbon-carbon composite material is preferably 20 to 400 MPa, and more preferably 30 to 300 MPa.

Further, the carbon-carbon composite material of the rotor disk preferably has a higher tensile strength than the carbon-carbon composite material of the pad. A rotor disk whose inner peripheral portion has a high tensile strength in the circumferential direction is particularly preferable in this case.

The carbon-carbon composite material of the rotor disk preferably has a higher tensile strength than the carbon-carbon composite material of the stator disk in the multi-disk type brake. A rotor disk whose inner peripheral portion has a high tensile strength in the circumferential direction is particularly preferable in the case of the multi-disk type brake.

The carbon-carbon composite materials used in the various types of the above friction members preferably have a compression modulus of elasticity of 0.1 to 300 GPa in the thickness direction of the friction member.

In the present invention, the respective carbon-carbon composite materials have different compression moduli of elasticity, so that they have different characteristics.

In this case, the difference in compression modulus of elasticity between the carbon-carbon composite materials (A) and (B) is preferably 0.1 to 200 GPa and more preferably 0.1 to 10 GPa.

The compression modulus of elasticity, which is a higher one, of the carbon-carbon composite material is preferably 1 to 300 GPa and more preferably 1 to 200 GPa. The compression modulus of elasticity, which is a lower one, of the carbon-carbon composite material is preferably 0.1 to 200 GPa and more preferably 0.5 to 100 GPa.

The carbon-carbon composite material of the rotor disk preferably has a higher compression modulus of elasticity than the carbon-carbon composite material of the pad.

The carbon-carbon composite material of the rotor disk preferably has a higher compression modulus of elasticity than the carbon-carbon composite material of the stator disk.

The carbon-carbon composite materials used in the various types of the above friction members preferably have an interlaminar shear strength of 0.1 to 30 MPa and more preferably 1 to 30 MPa in the radial direction of the friction member.

In the present invention, the respective carbon-carbon composite materials have different interlaminar shear strengths, so that they can form friction members having different characteristics.

In this case, the difference in interlaminar shear strength between the different carbon-carbon composite materials is preferably 0.1 to 20 MPa and more preferably 1 to 15 MPa.

The interlaminar shear strength, which is a higher one, of the carbon-carbon composite material is preferably 1 to 30 MPa and more preferably 3 to 20 MPa. The interlaminar shear strength, which is a lower one, of the carbon-carbon composite material is preferably 0.1 to 20 MPa and more preferably 1 to 15 MPa.

The carbon-carbon composite material of the pad preferably has a higher interlaminar shear strength than the carbon-carbon composite material of the rotor disk.

The carbon-carbon composite material of the stator disk preferably has a higher interlaminar shear strength than the carbon-carbon composite material of the rotor disk.

The carbon-carbon composite materials used in the various types of the above friction members preferably have a low rate of oxidation in the open air at a temperature of 600 to 1,200°C.

More specifically, preferable carbon-carbon composite materials have lower rates of oxidation in a range of 10⁻¹⁰ to 0.1 kg/kg per minute at 600°C, 10⁻⁶ to 0.2 kg/kg per minute at 800°C, and 10⁻³ to 0.3 kg/kg per minute at 1,000°C.

In the present invention, the respective carbon-carbon composite materials have different rates of oxidation, so that they can form friction members having different characteristics.

In this case, the difference in rate of oxidation in the open air between the different carbon-carbon composite materials is preferably 10⁻¹⁰ to 0.2 kg/kg per minute at 600°C and more preferably 10⁻⁶ to 0.01 kg/kg per minute at 600°C.

The rate of oxidation, which is a lower one, of the carbon-carbon composite material in the open air at 600°C is preferably 10⁻¹⁰ to 0.01 kg/kg per minute, and more preferably 10⁻¹⁰ to 0.008 kg/kg per minute. The rate of oxidation, which is a higher one, of the carbon-carbon composite material in the open air at 600°C is preferably 10⁻⁶ to 0.1 kg/kg per minute, and more preferably 10⁻⁴ to 0.1 kg/kg per minute.

The carbon-carbon composite material of the rotor disk preferably has a lower rate of oxidation in the open air than the carbon-carbon composite material of the pad.

The carbon-carbon composite material of the rotor disk preferably has a lower rate of oxidation in the open air than the carbon-carbon composite material of the stator disk.

Assuming that a temperature at which a carbon-carbon composite material is reduced by 1 mass% when raised in temperature at a rate of 10°C per minute in the open air is defined as an oxidation start temperature, the oxidation start temperature is desired to be as high as possible within a range of 300 to 1,200°C.

In the present invention, the respective carbon-carbon composite materials have different oxidation start temperatures, so that they can form friction members having different characteristics.

In this case, the difference in oxidation start temperature between the carbon-carbon composite materials in the open air is preferably 1 to 700°C and more preferably 10 to 200°C.

The oxidation start temperature, which is a higher one, of the carbon-carbon composite material in the open air is preferably 600 to 1,200°C and more preferably 700 to 1,200°C. The oxidation start temperature, which is a lower one, of the carbon-carbon composite material in the open air is preferably 300 to 900°C and more preferably 300 to 750°C.

The carbon-carbon composite material of the rotor disk preferably has a higher oxidation start temperature in the open air than the carbon-carbon composite material of the pad.

The carbon-carbon composite material of the rotor disk preferably has a higher oxidation start temperature in the open air than the carbon-carbon composite material of the stator disk.

The carbon-carbon composite materials used in the various types of friction members described above preferably have a density of 1.5 × 10³ to 2.2 × 10³ kg/m³.

In the present invention, the respective carbon-carbon composite materials have different densities, so that they can form friction members having different characteristics.

In this case, the difference in density between the other carbon-carbon composite materials is preferably 0.01 × 10³ to 0.7 × 10³ kg/m³ and more preferably 0.1 × 10³ to 0.3 × 10³ kg/m³.

The density, which is a higher one, of the carbon-carbon composite material is preferably 1.5 × 10³ to 2.2 × 10³ kg/m³ and more preferably 1.7 × 10³ to 2.1 × 10³ kg/m³. The density, which is a lower one, of the carbon-carbon composite material is preferably 1.4 × 10³to 2.0 × 10³ kg/m³ and more preferably 1.6 × 10³ to 1.9 × 10³ kg/m³.

The carbon-carbon composite material of the pad preferably has a lower density than the carbon-carbon composite material of the rotor disk.

The carbon-carbon composite material of the stator disk preferably has a lower density than the carbon-carbon composite material of the rotor disk.

According to the present invention, the material preperties other than the aforesaid ones can be differentiated in the carbon/carbon composite materials thereby to produce a highly durable disk pad type brake and multi-disk type brake having desired frictional characteristics.

It is preferable in the present invention that carbon-carbon composite materials having different thermal conductivities or different hardnesses be arranged or disposed at desired portions of the above-mentioned various types of friction members of the rotor disk, the pad or the like in accordance with the use of the resulting brake, environments in which the brake is used, and a method for controlling the brake, thereby to obtain particular desired frictional characteristics.

Then, the carbon-carbon composite material used in the present invention will be described below in detail.

The carbon-carbon composite material used herein is a composite material comprising carbon fibers and/or their precursor fibers, and a carbonaceous matrix as major constituent elements.

The carbon-carbon composite material used herein usually has a fiber volume content or rate of 10 to 80 vol%, preferably 20 to 70 vol% and more preferably 25 to 65 vol%.

If a carbon-carbon composite mateiral has a fiber volume content lower than the lower limit of the above range, then it will not exhibit a sufficient effect of reinforcement by the fibers and will become a brittle material which leads to a brake material having a low impact strength and low toughness against fracture, thus making it impossible for the resulting disk pad type brake or multi-disk type brake to exhibit sufficiently high performances and durability.

If the fiber volume content exceeds the upper limit of the above range, sufficiently high inter-fiber bonding strength will undesirably not be obtained.

The matrix volume content of the carbon-carbon composite material used in the present invention is determined by the fiber volume content and a void volume content, and is usually 19 to 89 vol%, preferably about 25 to 80 vol%.

The void volume content or rate of the carbon-carbon composite material used herein is usually 1 to 30 vol%, preferably 2 to 25 vol% and more preferably 2 to 10 vol%.

If the void volume rate is smaller than the lower limit of the above range, the step of densifying the composite material will become cumbersome, and an improvement in performance corresponding to an increase in manufacturing time will not be made. If the void volume rate exceeds the upper limit of the above range, the strength required for the brake material will be insufficient. In particular, it is undesirable to apply such a brake material to a roratable rotor disk.

An example of a method of manufacturing the carbon-carbon composite material used in the present invention will be described in detail.

The carbon fibers used in the carbon-carbon composite material include pitch-, polyacrylonitrile (PAN)-, and rayon-based carbon fibers. Carbon fibers are precarbide fibers, carbide fibers, or graphitized fibers obtained by firing precursor fibers as a raw material in an inert gas. The precursor fibers used in the preparation of the carbon-carbon composite material include various types of fibers pitch fibers, infusible fibers, PAN fibers, nonflammable fibers obtained by processing PAN fibers at 200 to 450° in an oxidizing atmosphere, rayon fibers, and fibers obtained by processing rayon fibers with a phosphate or nitrate.

At least one kind of fibers selected from these carbon fibers and precursor fibers can be used in the carbon-carbon composite material according to the present invention. In particular, the pitch-based carbon fibers and their precursor fibers are preferably used as they can easily increase the resulting composite material in wear resistance.

The carbonaceous pitch for use as a raw material for the above pitch-based carbon fibers, includes a coal-based, petroleum-based or synthetic pitch usually having a softening point of 100 to 400°C and preferably 150 to 350°C. The carbonaceous pitch used, may be an optically isotropic or optically anisotropic one. The optically anisotropic carbonaceous pitch is preferable, and in particular, an optically anisotropic carbonaceous pitch containing the optical anisotropic phase in an amount of 60 to 100 vol% is especially preferable.

There are obtained pitch fibers normally having an average diameter of 5 to 100 µm and preferably 7 to 30 µm by melt-spinning the carbonaceous pitch by a known method.

Subsequently, the thus obtained pitch fibers are processed to make them infusible in an oxidizing gas atmosphere at a temperature of usually 50 to 400°C and preferably 100 to 350°C, thus providing infusible fibers. The oxidizing gas includes air, oxygen, a nitrogen compound, a sulfur compound, a halogen or their mixture.

The processing time for rendering the pitch fibers infusible is usually 10 minutes to 20 hours. The obtained infusible fibers are further processed in an inert gas atmosphere at usually 350 to 3,000°C, preferably at 400 to 2,800°C, for 1 second to 5 hours, thus obtaining carbon fibers.

The carbon fibers or precursor fibers are usually used in the form of a bundle of about 500 to 25,000 continuous carbon fibers. At least one of such bundles may be used in the preparation of a unidirectional sheet or a laminate of unidirectional sheets, a two-dimensional fabric or a laminate of two-dimensional fabrics, a three-dimensional fabric or a mat type molding.

Fibers obtained by cutting the continuous carbon fibers and/or precursor fibers into pieces of a desired length, or carbon fibers and/or precursor fibers manufactured as staple fibers obtained from the spinning step can also be used for the above purpose. Such a bundle of fibers can be split and used as an aggregate of random staple fiber filaments. These staple fibers can be used in the form of a felt type sheet, a laminate of felt type sheets, or a mat type molding.

A molding made of the carbon fibers and/or precursor fibers or made of at least one kind of fibers selected from the carbon fibers and the precursor fibers may be used as it is or after further molded into sheets, blocks or cylinders. These modings are generically named herein "carbon fiber moldings". To prepare the carbon fiber moldings, a known method for laminating, needle punching, hot pressing, filament winding or the like may be employed. Alternatively, a plurality of these methods may also be employed.

In the present invention, a carbonaceous matrix is referred to as a matrix obtained by thermally processing an organic precursor or by pyrolyzing a gas phase precursor of hydrocarbons or the like. The organic precursor includes a thermoplastic organic precursor and a thermosetting organic precursor.

A typical example of the thermoplastic organic precursor is a carbonaceous pitch. The carbonaceous pitch includes a coal-based, petroleum-based or synthetic pitch usually having a softening point of 60 to 400°C and preferably 60 to 350°C.

One or more types of the above pitches can be used as a binder pitch and an impregnating pitch. As a binder pitch, one having a softening point of 200 to 400°C is used particularly preferably. As an impregnating pitch, one having a softening point of 60 to 200°C is used particularly preferably.

As the binder pitch and the impregnating pitch, an optically isotropic one and an optically anisotropic can both be used. In particular, as the binder pitch, an optically anisotropic pitch whose content of the optical anisotropic phase falls within a range of 60 to 100 vol% is particularly preferably used.

Carbon fibers or a carbon fiber molding is impregnated with the thermoplastic organic precursor and fired, thus producing a carbon-carbon composite material. Although firing can be performed at a reduced or atmospheric pressure, it is usually performed in a pressurized atmosphere or under uniaxial pressing.

The firing in a pressurized atmosphere is performed in an inert or reducing gas atmosphere while applying a pressure of 0.1 to 1,000 MPa, and preferably about 0.5 to 100 MPa, at usually a temperature of 400 to 2,000°C, and preferably about 500 to 1,500°C with use of a high-pressure firing unit, a hydrostatic hot press unit or the like.

Firing under uniaxial pressing is performed with a hot press unit or the like at a high uniaxial pressure of usually 0.1 to 50 MPa, preferably about 0.4 to 5 MPa, at a maximum temperature of 400 to 2,000°C and preferably about 500 to 1,000°C. in this case, the ambient pressure can be selected from vacuum, a reduced pressure, a normal atmospheric pressure and a superatmospheric pressure. The gas atmosphere can also be selected from vacuum, an inert atmosphere, a reducing gas atmosphere and the atmosphere.

The thermosetting organic precursor usually includes a carbonizable resin, more specifically a thermosetting resin that can be carbonized, such as a phenol resin, a furan resin or a carbodiimide resin. The temperatures for curing these thermosetting resins are usually 80 to 200°C and preferably 110 to 150°C. Carbon fibers or a carbon fiber molding is impregnated with the thermosetting organic precursor, formed, cured in the above range of curing temperatures, subjected to post-cure processing as required in a temperature range of 140 to 300°C and then fired, thereby to obtain a carbon-carbon composite material.

To perform forming, a known method such as a laminating, hot pressing, filament winding or rolling method can be employed. Alternatively, a plurality of these methods can be employed.

The curing treatment and post-cure treatment can be executed during forming, after forming, or during and after forming.

The firing treatment can be usually effected in a vacuum, at a reduced pressure, in an inert atmosphere or in a reducing gas atmosphere at a temperature of 200 to 3,000°C and preferably 500 to 2,500°C.

The inert gas used herein includes nitrogen, argon or helium that is generally known as an inert gas. The reducing gas includes hydrogen or carbon monoxide. The state under a vacuum or reduced pressure is a state where an inert gas, a reducing gas or the air is present at a pressure less than the atmospheric pressure, i.e., at about 10⁻⁵ Pa at the lowest.

The gas phase precursor used herein may be any carbon atom-containing compound that can be gasified. Carbon obtained by pyrolyzing a gas phase precursor may be deposited on carbon fibers or a molding thereof to obtain a carbon-carbon composite material.

The treatment of deposition of carbon produced by pyrolysis mentioned here is to form carbon by gas phase pyrolysis of hydrocarbons or the like for depositing the carbon, and is generally called chemical vapor deposition (CVD). More specifically, a hydrocarbon such as methane, ethane, acetylene, propane, benzene or a natural gas like, or a material obtained by diluting at least one of these hydrocarbons with an inert gas or hydrogen is used as a raw material to be pyrolyzed in the gas phase for depositing the resulting carbon on the carbon fiber molding.

The thermal decomposition or pyrolyzing temperature is usually 700 to 3,000°C and preferably 800 to 2,500°C.

Although pyrolysis can be performed at an atmospheric pressure, it is preferable to perform the pyrolysis at a reduced pressure, more specifically 50 to 10,000 Pa and preferably about 50 to 5,000 Pa.

When the carbon-carbon composite material so obtained has desired physical properties such as desired density, matrix volume content and void volume content it can be used as a friction member for the brake without or after grinding and the like.

When the carbon-carbon composite material so obtained does not have such desired physical properties, e.g., desired density, matrix volume content, void volume content, hardness and thermal conductivity, it may further be impregnated with an organic precursor as described above and fired, or it gets carbon produced by pyrolysis to be deposited thereon once or more, thus obtaining a carbon-carbon composite material having such desired physical properties. This processing or treatment is called densification processing.

When the carbon-carbon composite material thus obtained still does not have such desired physical properties as above, it may be densified as described above and thereafter fired.

Said firing treatment is to fire a carbon-carbon composite material in an inert atmosphere at a reduced pressure, an atmospheric pressure or an elevated pressure. The pressure in the inert atmosphere is 10⁻⁸ to 200 MPa and preferably 0.1 to 100 MPa. The treatment temperature varies depending on predetermined desired physical properties, and is normally 1,500 to 3,000°C.

Firing treatment can be performed every time densification treatment is finished or discontinuously after densification is performed optionally repeatedly in compliance with predetermined desired physical properties to be obtained. The firing temperature can be selected for each firing operation.

In methods of manufacturing carbon-carbon composite materials as described above, there will be obtained carbon-carbon composite materials having characteristics at least one of which is defferent from one another by suitably selecting one or more operational factors such as the type of carbon fibers, the type of precursor fibers, a method of manufacturing the carbon fibers and precursor fibers, the volume content of the carbon fibers, a mixing ratio of carbon fibers to precursor fibers if two or more types of carbon fibers and precursor fibers are employed, the type of carbon fiber moldings, the type of a matrix raw material, the volume content of the matrix, a compounding ratio of matrices if two or more different kinds of matrices are employed, a void volume content, a densification method and its conditions, firing conditions and the like.

### BRIEF DESCRIPTION OF THE DRAWINGS

Fig. 1 is a view showing the concept of a disk pad type brake, wherein 1 is a rotor disk and 2 is a pad; and
Fig. 2 is a view showing the concept of a multi-disk type brake, wherein 1 is a rotor disk and 3 is a stator disk.

### DESCRIPTION OF THE PREFERRED EMBODIMENTS

The present invention will be described in detail by way of preferred Examples thereof. Note that the present invention is not limited to these Examples.

### (Example 1)

A felt mat-reinforced carbon-carbon composite material B prepared from a felt mat made of pitch-based carbon fibers as reinforcing fibers and a pitch-based carbonaceous matrix as a matrix, was employed as a brake disk material.

A two-dimensional reinforced carbon-carbon composite material A prepared from a two-dimensional fabric made of pitch-based carbon fibers as reinforcing fibers and a pitch-based carbonaceous matrix as a matrix, was employed as a brake pad material. Table 1 shows the physical properties of the materials A and B.

The thermal conductivity of the pad material A is lower than that of the rotor disk material B in the thickness direction of the friction member. The thermal conductivity of the pad material A is higher than that of the rotor disk material B in the radial direction of the friction member. The Shore hardness of the frictionally sliding surface of the pad material A is lower than that of the rotor disk material B.

A disk pad type brake having these carbon-carbon composite materials B and A as its rotor disk and pad, respectively, was evaluated by using a brake tester, for the friction coefficient of the brake and the amount thereof worn. Table 2 shows the testing conditions. As a result, the coefficient of friction was 0.3, the amount of the rotor disk worn was 0.4 µm every braking, and the amount of the pad worn was 0.6 µm every braking, thus finding that a highly durable brake was obtained (Table 3).

### (Example 2)

A felt mat-reinforced carbon-carbon composite material B using therein a felt mat made of pitch-based carbon fibers as reinforcing fibers and a carbonaceous matrix, as a matrix, made from pitch as a raw material, was employed as a brake disk material.

A felt mat-reinforced carbon-carbon composite material C obtained by reinforcing with the same reinforcing fibers as above, using therein the same matrix as described above and changing the firing conditions to change the hardness and thermal conductivity of the resulting composite material, was employed as a brake pad material. Table 1 shows the physical properties of B and C.

The thermal conductivity of the friction member of the pad material C is lower than that of the rotor disk material B in the thickness direction of the friction member.

A disk pad type brake having these carbon-carbon composite materials B and C respectively as its rotor disk and pad, was measured for its coefficient of friction and the amount of the brake worn by using a brake tester. Table 2 shows the testing conditions. As a result, the coefficient of friction was 0.5, the amount of the rotor disk worn was 0.8 µm every braking, and the amount of the pad worn was 0.5 µm every braking, thus finding that a brake having a large braking force was obtained (Table 3).

### (Example 3)

A brake test was conducted by following the same procedure as in Example 2 except that the carbon-carbon composite material C described above was employed as a rotor disk material and the carbon-carbon composite material B described above was employed as a pad material.

The thermal conductivity in the radial direction of the pad material B is higher than that of the rotor disk material C. The Shore hardness of the frictionally sliding surface of the pad material B is lower than that of the rotor disk material C.

As a test result, the brake tested indicated that its coefficient of friction was 0.5, its amount of the rotor disk worn was 0.9 µm every braking, and its amount of the pad worn was 0.6 µm every braking, thus finding that the brake had a large braking force (Table 3).

### (Example 4)

A felt mat-reinforced carbon-carbon composite material B using therein a felt mat made of pitch-based carbon fibers as reinforcing fibers and a carbonaceous matrix, as a matrix, made from pitch as a raw material, was employed as a brake disk material.

A felt mat-reinforced carbon-carbon composite material C obtained by reinforcing with the same reinforcing fibers, using therein the same matrix as described above and changing the firing conditions to change the hardness and the thermal conductivity of the resulting composite material, was employed as one of brake pad materials.

Further, a two-dimensional reinforced carbon-carbon composite material A using therein two-dimensional fabrics made of pitch-based carbon fibers as reinforcing fibers and a carbonaceous matrix, as a matrix, made from pitch as a raw material, was employed as one of the brake pad materials. Table 1 shows the physical properties of A, B and C.

The thermal conductivities in the thickness direction of the pad materials A and C are lower than that of the rotor disk material B. The thermal conductivity in the radial direction of the pad material A is higher than that of the rotor disk material B. The Shore hardness of the frictionally sliding surface of the pad material A is lower than that of the rotor disk material B.

A disk pad type brake having these carbon-carbon composite materials B, and A and C as its rotor disk and pads, respectively, was evaluated by using the brake tester for the friction coefficient of the brake and the amount thereof worn. Table 2 shows the testing conditions. As a result, the coefficient of friction was 0.4, the amount of the rotor disk worn was 0.6 µm every braking, and the wear amount of the pads worn was 0.6 µm every braking, thus finging that a highly durable brake having a large braking force was obtained (Table 3).

### (Comparative Example 1)

A brake test was conducted by following the same procedure as in Example 1 except that the carbon-carbon composite material A described above was employed as both a rotor disk material and a pad material. As a result, the brake tested indicated that its coefficient of friction was 0.4, its amount of the rotor disk worn was 1.2 µm every braking and its amount of the pad worn was 3.6 µm every braking. The amounts of said materials worn were increased as compared to those in Example 1 (Table 3).

### (Comparative Example 2)

A brake test was conducted by following the same procedure as in Example 1 except that the carbon-carbon composite material B described above was employed as both a rotor disk material and a pad material. As a test result, the brake tested indicated that its coefficient of friction was 0.2 to 0.5, which was not stable as compared to that of the brake in Example 1 (Table 3).

### (Comparative Example 3)

A brake test was conducted by following the same procedure as in Example 1 except that the carbon-carbon composite miterial C described above was employed as both a rotor disk material and a pad material. As a test result, the brake tested indicated that its coefficient of friction was 0.6, its amount of the rotor disk worn was 1.8 µm every braking and its amount of the pad worn was 4.0 µm every braking. The amounts of the materials worn were increased as compared to those in Example 2 (Table 3).

### (Comparative Example 4)

A brake test was conducted by following the same procedure as in Example 1 except that the carbon-carbon composite material B described above was employed as a rotor disk material and a copper-based sintered alloy was employed as a pad material. As a test result, the rotor disk wore considerably, so that the test was interrupted.

### (Comparative Example 5)

A brake test was conducted by following the same procedure as in Example 1 except that gray cast iron FCV-50 was employed as a rotor disk material and the carbon-carbon composite material A was employed as a pad material. As a test result, although both the rotor disk and the pads did not wear substantially, the coefficient of friction of the brake tested was as low as 0.1, so that no sufficient braking force was obtained.

### (Example 5)

A felt mat-reinforced carbon-carbon composite material B prepared from a felt mat made of pitch-based carbon fibers as reinforcing fibers and a pitch-based carbonaceous matrix as a matrix, was employed as a brake disk material.

A felt mat-reinforced carbon-carbon composite material D, prepared from a felt mat made of pitch-based carbon fibers as reinforcing fibers, and a pitch-based carbonaceous matrix and carbon obtained by gas phase pyrolysis as a matrix, was employed as a brake pad material. Tables 1 and 4 show the physical properties of B and D, respectively

The thermal conductivity in the thickness direction of the pad material D is lower than that of the rotor disk material B.

A disk pad type brake having these carbon-carbon composite materials B and D as its rotor disk and pads, respectively, was evaluated by using the brake tester, for the friction coefficient of the brake and the amount thereof worn. Table 2 shows the testing conditions. As a result, the coefficient of friction was 0.4, the amount of the rotor disk worn was 0.5 µm every braking, and the amount of the pad worn was 0.4 µm every braking, thus finding that a highly durable brake was obtained (Table 5).

### (Example 6)

A felt mat-reinforced carbon-carbon composite material B prepared from a felt mat made of pitch-based carbon fibers as reinforcing fibers and a pitch-based carbonaceous matrix as a matrix, was employed as a brake disk material.

A mat-reinforced carbon-carbon composite material F, prepared from a mat type molding made of continuous pitch-based carbon fibers as reinforcing fibers and a pitch-based carbonaceous matrix as a matrix, was employed as a brake pad material. Tables 1 and 4 show the physical properties of B and F, respectively.

The thermal conductivity in the thickness direction of the pad material F is lower than that of the rotor disk material B. The Shore hardness of the frictionally sliding surface of the pad material F was lower than that of the rotor disk material B.

A disk pad type brake having these carbon-carbon composite materials B and F as its rotor disk and pads, respectively, was evaluated by using the brake tester, for the friction coefficient of the brake and the amount thereof worn. Table 2 shows the testing conditions. As a result, the coefficient of friction was 0.3, the amount of the rotor disk worn was 0.4 µm every braking, and the amount of the pad worn was 0.8 µm every braking, thus finding that a highly durable brake was obtained (Table 5).

### (Example 7)

A felt mat-reinforced carbon-carbon composite material D prepared from a felt mat made of pitch-based carbon fibers as reinforcing fibers, and a pitch-based carbonaceous matrix and carbon obtained by gas phase pyrolysis as a matrix, was employed as a brake disk material.

A mat-reinforced carbon-carbon composite material E, prepared from a mat type molding made of continuous pitch-based carbon fibers as reinforcing fibers, and a pitch-based carbonaceous matrix and carbon obtained by gas phase pyrolysis as a matrix, was employed as a brake pad material. Table 4 shows the physical properties of D and E.

The thermal conductivity in the thickness direction of the pad material E is lower than that of the rotor disk material D. The Shore hardness of the frictionally sliding surface of the pad material E was lower than that of the rotor disk material D.

A disk pad type brake having these carbon-carbon composite materials D and E as its rotor disk and pads, respectively, was evaluated by using the brake tester, for the friction coefficient of the brake and the amount thereof worn. Table 2 shows the testing conditions. As a result, the coefficient of friction was 0.4, the amount of the rotor disk worn was 0.2 µm every braking, and the amount of the pad worn was 0.5 µm every braking, thus finding that a highly durable brake was obtained (Table 5).

### (Example 8)

A mat-reinforced carbon-carbon composite material F prepared from a mat type molding made of continuous pitch-based carbon fibers as reinforcing fibers and a pitch-based carbonaceous matrix as a matrix, was employed as a brake disk material. Table 4 shows the physical properties of F and E.

A mat-reinforced carbon-carbon composite material E, prepared from a mat type molding made of continuous pitch-based carbon fibers as reinforcing fibers, and a pitch-based carbonaceous matrix and carbon obtained by gas phase pyrolysis as a matrix, was employed as a brake pad material.

The thermal conductivity in the thickness direction of the pad material E is lower than that of the rotor disk material F.

A disk pad type brake having these carbon-carbon composite materials F and E as its rotor disk and pads, respectively, was evaluated by using the brake tester, for the friction coefficient of the brake and the amount thereof worn. Table 2 shows the testing conditions. As a result, the coefficient of friction was 0.6, the amount of the rotor disk worn was 0.7 µm every braking, and the amount of the pad worn was 0.5 µm every braking, thus finding that the brake obtained had a large braking force. (Table 5).

**Table 1**

| Test Material | A | B | C |
|---|---|---|---|
| Reinforced Structure of Carbon Fiber Molding | Laminate of two-dimensional fabrics | Felt mat | Felt mat |
| Kind of Carbon Fiber and the Volume Content vol% | Pitch-based continuous fiber 55 | Pitch-based staple fiber 34 | Pitch-based staple fiber 34 |
| Kind of Matrix and its Volume Content vol% | Pitch-based carbon 40 | Pitch-based carbon 61 | Pitch-based carbon 61 |
| Void Volume Content vol% | 5 | 5 | 5 |
| Final Firing Temperature °C | 2,000 | 2,000 | 1,700 |
| Density × 10³ kg/m³ | 1.9 | 1.9 | 1.9 |
| Thermal Conductivity W/m·K in the thickness direction | 9.3 | 18.9 | 9.7 |
| in the radial direction | 60.1 | 46.4 | 23.9 |
| Shore Hardness | 71 | 81 | 90 |

**Table 2**

| Item | Testing Conditions |
|---|---|
| Testing Method | Deceleration test under predetermined pressing force |
| Inertial Mass | 0.39 kg·m² |
| Rotor Disk | Outer diameter: 130 mm; inner diameter: 36 mm; thickness: 20 mm; one rotor disk (Single side) |
| Pad | Upper bottom: 20 mm; lower bottom: 30 mm; height: 20 mm; thickness: 20 mm; two pads |
| Average Radius of Frictionally Sliding Area | 54.13 mm |
| Initial Velocity | 4,100 rpm |
| Pressing Force | 785 N |

**Table 3**

| | Rotor Disk Material | Pad Material | | Friction Coefficient | Amount of Disk and Pad (Friction Member) Worn (µm/every braking) | |
|---|---|---|---|---|---|---|
| | | No. 1 | No. 2 | | Disk | Pad |
| Ex. 1 | B | A | | 0.3 | 0.4 | 0.6 |
| Ex. 2 | B | C | | 0.5 | 0.8 | 0.5 |
| Ex. 3 | C | B | | 0.5 | 0.9 | 0.6 |
| Ex. 4 | B | A | C | 0.4 | 0.6 | 0.6 |
| Comp. Ex. 1 | A | A | | 0.4 | 1.2 | 3.6 |
| Comp. Ex. 2 | B | B | | 0.2 - 0.5 | 0.5 | 1.3 |
| Comp. Ex. 3 | C | C | | 0.6 | 1.8 | 4.0 |
| Comp. Ex. 4 | B | Copper-based Sintered alloy | | (0.6) | Large amount | - |
| Comp. Ex. 5 | Gray cast iron | A | | 0.1 | 0 | 0.1 |

**Table 4**

| Test Material | D | E | F |
|---|---|---|---|
| Reinforced Structure of Carbon Fiber Molding | Felt Mat | Mat | Mat |
| Kind of Carbon Fiber and the Volume Content vol% | Pitch-based staple fiber 29 | Pitch-based continuous fiber 33 | Pitch-based continuous fiber 31 |
| Kind of Matrix and its Volume Content vol% | Pitch-based carbon 27 Gas phase pyrolysis carbon 31 | Pitch-based carbon 24 Gas phase pyrolysis carbon 32 | Pitch-based carbon 62 |
| Void Volume Content vol% | 13 | 11 | 7 |
| Final Firing Temperature °C | 2,000 | 2,000 | 2,000 |
| Density × 10³ kg/m³ | 1.8 | 1.8 | 1.8 |
| Thermal Conductivity W/m·K in the thickness direction | 11.9 | 4.5 | 11.7 |
| in the radial direction | 44.8 | 51.2 | 43.7 |
| Shore Hardness | 90 | 80 | 74 |

**Table 5**

| | Rotor Risk Material | Pad Material | | Friction Coefficient | Amount of Disk and Pad (Friction Member) Worn (µm/every braking) | |
|---|---|---|---|---|---|---|
| | | No. 1 | No. 2 | | Disk | Pad |
| Ex. 5 | B | D | | 0.4 | 0.5 | 0.4 |
| Ex. 6 | B | F | | 0.3 | 0.4 | 0.8 |
| Ex. 7 | D | E | | 0.4 | 0.2 | 0.5 |
| Ex. 8 | F | E | | 0.6 | 0.7 | 0.5 |

### (Example 9)

A two-dimensional reinforced carbon-carbon composite material A prepared from a two-dimensional fabric made of pitch-based carbon fibers as reinforcing fibers and a pitch-based carbonaceous matrix as a matrix, was employed as a rotor disk material.

A felt mat-reinforced carbon-carbon composite material B prepared from a felt mat made of pitch-based carbon fibers as reinforcing fibers and a pitch-based carbonaceous matrix as a matrix, was employed as a stator disk material. Table 1 shows the physical properties of the materials A and B.

The thermal conductivity in the thickness direction of the stator disk material B is higher than that of the rotor disk material A. The thermal conductivity in the radial direction of the rotor disk material A is higher than that of the stator disk material B. The Shore hardness of the frictionally sliding surface of the stator disk material B is higher than that of the rotor disk material A.

A multi-disk type brake constituted by one rotor disk A and one stator disk B was evaluated by using a brake tester for the friction coefficient of the brake and the amount thereof worn. Table 7 shows the testing conditions.

As a result, the coefficient of friction was 0.49, and the total specific amount of the disks worn was 20 mm³/MJ, thus finding that a highly durable brake was obtained (Table 8).

### (Example 10)

A two-dimensional reinforced carbon-carbon composite material A prepared from a two-dimensional fabric made of pitch-based carbon fibers as reinforcing fibers and a pitch-based carbonaceous matrix as a matrix, was employed as a rotor disk material.

A mat-reinforced carbon-carbon composite material G, prepared from a mat made of pitch-based carbon fibers as reinforcing fibers, and a phenol resin-based carbonaceous matrix and carbon obtained by gas phase pyrolysis as a matrix, was employed as a stator disk material. Tables 1 and 6 show the physical properties of the materials A and G.

The thermal conductivity in the radial direction of the rotor disk material A is higher than that of the stator disk material G. The Shore hardness of the frictionally sliding surface of the stator disk material G is higher than that of the rotor disk material A.

A multi-disk type brake constituted by one rotor disk A and one stator disk G was evaluated by using the brake tester for the friction coefficient of the brake and the amount thereof worn. Table 7 shows the testing conditions.

As a result, the coefficient of friction was 0.51, and the total specific amount of the disks worn was 30 mm³/MJ, thus finding that brake obtained had a large braking force (Table 8).

### (Comparaive Example 6)

A two-dimensional reinforced carbon-carbon composite material A prepared from a two-dimensional fabric made of pitch-based carbon fibers as reinforcing fibers and a pitch-based carbonaceous matrix as a matrix, was employed as both a rotor disk material and a stator disk material. Table 1 shows the physical properties of A.

### (Example 11)

A two-dimensional reinforced carbon-carbon composite material A prepared from a two-dimensional fabric made of pitch-based carbon fibers as reinforcing fibers and a pitch-based carbonaceous matrix as a matrix, was employed as a rotor disk material.

A felt mat-reinforced carbon-carbon composite material B prepared from a felt mat made of pitch-based carbon fibers as reinforcing fibers and a pitch-based carbonaceous matrix as a matrix, was employed as stator disk materials.

The thermal conductivity in the thickness direction of the stator disk material B is higher than that of the rotor disk material A. The thermal conductivity in the radial direction of the rotor disk material A is higher than that of the stator disk material B. The Shore hardness of the frictionally sliding surface of the stator disk materials B is higher than that of the rotor disk material A.

A multi-disk type brake constituted by arranging one stator disk B, two rotor disks A and one stator disk B in this order was evaluated by using the brake tester for the friction coefficient of the brake and the amount thereof worn. Table 7 shows the testing conditions.

As a result, the coefficient of friction was 0.33, and the total specific amount of the disks worn was 2.0 × 10⁻² mm³/MJ, thus finding that a highly durable brake was obtained (Table 8).

### (Example 12)

A two-dimensional reinforced carbon-carbon composite material A prepared from a two-dimensional fabric made of pitch-based carbon fibers as reinforcing fibers and a pitch-based carbonaceous matrix as a matrix, was employed as a rotor disk material.

A felt mat-reinforced carbon-carbon composite material B prepared from a felt mat made of pitch-based carbon fibers as reinforcing fibers and a pitch-based carbonaceous matrix as a matrix, was employed as one of stator disk materials.

Further, a mat-reinforced carbon-carbon composite material G, prepared from a mat made of pitch-based carbon fibers as reinforcing fibers and a phenol-based resin carbonaceous matrix and carbon obtained by gas phase pyrolysis, as a matrix, was employed as one of stator disk materials. Tables 1 and 6 show the physical properties of A, B and G.

The thermal conductivity in the thickness direction of the stator disk material B is higher than that of the rotor disk material A. The thermal conductivity in the radial direction of the rotor disk material A is higher than that of the stator disk material B or G. The Shore hardness of the frictionally sliding surface of each of the stator disk materials B and G is higher than that of the rotor disk material A.

A multi-disk type brake constituted by arranging one stator disk B, two rotor disks A and one stator disk G in this order was evaluated by using the brake tester for the friction coefficient of the brake and the amount thereof worn. Table 7 shows the testing conditions.

As a result, the coefficient of friction was 0.53, and the total specific amount of the disks worn was 3.5 × 10⁻² mm³/MJ, thus finding that a brake having a large braking force was obtained (Table 8).

### (Example 13)

A two-dimensional reinforced carbon-carbon composite material A prepared from a two-dimensional fabric made of pitch-based carbon fibers as reinforcing fibers and a pitch-based carbonaceous matrix as a matrix, was employed as one of rotor disk materials.

A felt mat-reinforced carbon-carbon composite material B prepared from a felt mat made of pitch-based carbon fibers as reinforcing fibers and a pitch-based carbonaceous matrix as a matrix, was employed as one of the rotor disk materials and a stator disk material. Table 1 shows the physical properties of the materials A and B.

The thermal conductivity in the thickness direction of the stator disk material B is higher than that of the material A employed as one rotor disk. The thermal conductivity in the radial direction of the material A employed as one rotor disk is higher than that of the stator disk material B. The Shore hardness of the frictionally sliding surface of the stator disk material B is higher than that of the material A employed as one rotor disk.

A multi-disk type brake constituted by arranging one stator disk B, one rotor disk A, one rotor disk B and one stator disk B in this order was evaluated by using the brake tester for the friction coefficient and the amount thereof worn. Table 7 shows the testing conditions.

As a result, the coefficient of friction was 0.44, and the total specific amount of the disks worn was 1.8 × 10⁻² mm³/MJ, thus finding that a highly durable brake having a large braking force was obtained (Table 8).

### (Example 14)

A two-dimensional reinforced carbon-carbon composite material A prepared from a two-dimensional fabric made of pitch-based carbon fibers as reinforcing fibers and a pitch-based carbonaceous matrix as a matrix, was employed as a rotor disk material.

A two-dimensional reinforced carbon-carbon composite material A prepared from a two-dimensional fabric made of pitch-based carbon fibers as reinforcing fibers and a pitch-based carbonaceous matrix as a matrix, was employed as a base material for a stator disk. Eight screw holes the total hole area of which corresponds to 10% of the frictionally sliding surface area were formed on the average sliding radius of the stator disk. Screws obtained by processing a felt mat reinforced carbon-carbon composite material B prepared from a felt mat made of pitch-based carbon fibers as reinforcing fibers and a carbonaceous matrix as a matrix, made of pitch as a raw material, were mounted in these screw holes. In this mounting operation, the threaded surfaces of the screws were coated with a carbon-based adhesive for the purpose of preventing the screws from loosening, and the resultant structure was fired at 1,000°C and fixed to obtain a material A + B as a stator disk.

The thermal conductivity in the thickness direction of the material B employed in part of the stator disk is higher than that of the rotor disk material A. The thermal conductivity in the radial direction of the rotor disk material A is higher than that of the material B employed in part of the stator disk. The Shore hardness of the frictionally sliding surface of the material B employed in part of the stator disk is higher than that of the rotor disk material A.

A multi-disk type brake constituted by arranging one stator disk A + B, two rotor disks A and one stator disk A + B in this order was evaluated by using a brake tester for its coefficient of friction and the amount thereof worn. Table 7 shows the testing conditions.

As a result, it was found in the brake that its coefficient of friction was 0.29, and its total specific amount of the disks worn was 2.8 x 10⁻² mm³/MJ, thus the brake had an adjusted braking force (Table 8).

### (Comparative Example 7)

A two-dimensional reinforced carbon-carbon composite material A prepared from a two-dimensional fabric made of pitch-based carbon fibers as reinforcing fibers and a pitch-based carbonaceous matrix as a matrix, was employed as a rotor disk material and a stator disk material. Table 1 shows the physical properties of A.

A multi-disk type brake constituted by arranging one stator disk A, two rotor disks A and one stator disk A in this order was evaluated by using the brake tester for the friction coefficient of the brake and the amount thereof worn. Table 7 shows the testing conditions.

As a result, the coefficient of friction was 0.28, and the total specific amount of the disks worn was 2.9 × 10⁻² mm³/MJ, thus finding that a standard brake was obtained (Table 8).

**Table 6**

| Test Material | G |
|---|---|
| Reinforced Structure of Carbon Fiber Molding | Mat |
| Kind of Carbon Fiber and the Volume Content vol% | Pitch-based continuous fiber 33 |
| Kind of Matrix and its Volume Content vol% | Phenol-resin carbon 25 Gas phase pyrolysis carbon 30 |
| Void Volume Content vol% | 12 |
| Final Firing Temperature | 2,000 |
| Density × 10³ kg/m³ | 1.7 |
| Thermal Conductivity W/m·K in the thickness direction | 4.0 |
| in the radial direction | 28.0 |
| Shore Hardness | 90 |

**Table 7**

| | Ex. 9, 10 Comp. Ex. 6 | Ex. 11, 12, 13, 14 Comp. Ex. 7 |
|---|---|---|
| Testing Method | Deceleration test under Predetermined pressing force | |
| Inertial Mass Per Frictionally Sliding Surface kg·m² | 0.39 | 100 |
| Rotor Disk mm | Outer diameter: 130 Inner diameter: 36 Thickness : 20 | Outer diameter: 422 Inner diameter: 194 Thickness: 20 |
| Stator Disk mm | Outer diameter: 130 Inner diameter: 100 Thickness : 20 | Outer diameter: 450 Inner diameter: 232 Thickness: 20 |
| Average Radius of Frictionally Sliding Area mm | 57.5 | 163.5 |
| Initial Velocity rpm | 3737 | 2180 |
| Pressing Force N | 551 | 8230 |

**Table 8**

| | Disk Constitution | Friction Coefficient | Total Specific Amount of Disk worn (mm³/MJ) |
|---|---|---|---|
| Ex. 9 | [A]/B | 0.49 | 20 |
| Ex. 10 | [A]/G | 0.51 | 30 |
| Comp. Ex. 6 | [A]/A | 0.27 | 49 |
| | | | |
| Ex. 11 | B/[AA]/B | 0.33 | 2.0 × 10⁻² |
| Ex. 12 | B/[AA]/G | 0.53 | 3.5 × 10⁻² |
| Ex. 13 | B/[AB]/B | 0.44 | 1.8 × 10⁻² |
| Ex. 14 | A+B[AA]/A+B | 0.29 | 2.8 × 10⁻² |
| Comp. Ex. 7 | A/[AA]/A | 0.28 | 2.9 × 10⁻² |
| (Notes) (1) A, B and G indicate carbon-carbon composite materials having respectie different characteristics, and A + B is a disk having a frictionally sliding surface part of which is made of B and the rest of which is made of A. (2) Symbols within [] indicate rotor disks, and other symbols indicate stator disks. (3) Symbols / indicates a frictionally sliding surface. | | | |

According to the present invention, highly durable disk pad type brake and multi-disk type brake having frictional characteristics that match their uses, environments in which they are used and methods for controlling them, can be obtained.

Where technical features mentioned in any claim are followed by reference signs, those reference signs have been included for the sole purpose of increasing the intelligibility of the claims and accordingly, such reference signs do not have any limiting effect on the scope or each element identified by way of example by such reference signs.

## Claims

1. A disk pad type brake comprising a rotor disk provided with a carbon-carbon composite material (A) as a friction member, and at least one pad provided with a carbon-carbon composite material (B) as a friction member, wherein said carbon-carbon composite material (A) and said carbon-carbon composite material (B) are different in characteristics from each other.

2. A multi-disk type brake comprising at least one rotor disk provided with a carbon-carbon composite material (A) as a friction member, and at least one stator disk provided with a carbon-carbon composite material (B) as a friction member, wherein said carbon-carbon composite material (A) and said carbon-carbon composite material (B) are different in characteristics from each other.
